# EUROPEAN PATENT APPLICATION

(11) **EP 4 624 273 A2**
(43) Date of publication of application: **01.10.2025**
(21) Application number: 25161677.7
(22) Date of filing: 04.03.2025
(51) Int. Cl.: B60R 19/56

(54) **A UNIVERSAL REAR UNDERRUN PROTECTOR BRACKET ASSEMBLY FOR VARIABLE CONSOLE HEIGHTS**

(30) Priority: 07.03.2024 IN 202441016539
(71) Applicant: Daimler Truck AG, 70771 Leinfelden-Echterdingen (DE)
(72) Inventor: Senthivinayagam, Chandrasekaran, Bangalore (IN); Bhat, Shivananda, Bengaluru (IN); Akbas, Zeynep, Istanbul (TR)

(57) **Abstract**

The invention relates to a universal rear underrun protector bracket assembly **(100),** featuring innovative design elements and attachment methodologies tailored to specific console variants. The assembly **(100)** integrates standardized shapes, common tooling, and strategic component integration to streamline manufacturing processes, reduce production costs, and enhance operational efficiency. The assembly **(100)** utilizes bolting mechanism **(105)** for the different console variant for mitigating weld failure risks, thereby optimizing structural integrity and reliability while minimizing maintenance requirements. The assembly **(100)** accommodates diverse console configurations ensuring optimal performance and safety across varied vehicular applications.

## Description

### Preamble to the Description

The following specification particularly describes the invention and the manner in which it is to be performed:

### DESCRIPTION OF THE INVENTION

### Technical field of the invention

The present invention pertains to the field of vehicular safety systems, particularly Rear Underrun Protectors (RUPs) installed on vehicles to mitigate the risk of smaller vehicles sliding beneath the rear of larger vehicles during collisions. More specifically, the invention relates to the design and fabrication of rear underrun protector bracket assemblies, focusing on achieving structural versatility and cost-effectiveness across various vehicle console heights.

### Background of the invention

Rear underrun protectors are integral components of vehicular safety systems, mandated by regulatory agencies to reduce the severity of accidents involving vehicles of disparate sizes. The rear underrun protectors typically consist of rigid structures affixed to the rear of vehicles, designed to prevent underride collisions by creating a barrier between the vehicles involved.

A crucial element of rear underrun protector systems is the bracket assembly responsible for securely mounting the protector to the vehicle chassis. Traditionally, the manufacturing process for these bracket assemblies has been characterized by the production of multiple variants to accommodate different vehicle console heights. This approach necessitates customized parts and tooling for each variant, resulting in increased production costs and logistical complexities.

The primary problem to be addressed pertains to the inefficiencies and cost burdens associated with manufacturing multiple variants of rear underrun protector bracket assemblies to accommodate different vehicle console heights. The existing approach of customizing bracket assemblies for each console height entails significant production overhead, increased lead times, and logistical complexities in inventory management and assembly.

Furthermore, the reliance on custom tooling and parts for each variant contributes to elevated manufacturing costs and logistical challenges. There exists a pressing need for a solution that can streamline the manufacturing process, reduce production costs, and enhance operational efficiency while ensuring compliance with safety standards and preserving structural integrity.

The drawbacks of the prior art underscore the need for a more streamlined and cost-effective solution that can address the diverse range of vehicle console heights encountered in the automotive industry.

For instance, the Patent Application No. CN216401554U titled *"Adjustable truck rear lower part protection device"* discloses a an adjustable truck rear lower part protection device which is characterized by comprising a beam assembly and two connecting supports; the beam assembly comprises a middle main beam and C-shaped beams at two ends; the middle main beam is a hollow rectangular tubular beam structure with a main beam front and rear vertical face and main beam upper and lower wing faces, the C-shaped beam is composed of a protection vertical face and upper and lower wing faces, the protection vertical face of the C-shaped beam is attached to the inner side of the main beam front vertical face of the middle main beam and is matched with the main beam front vertical face, and the upper and lower wing faces of the C-shaped beam are attached to the inner side of the main beam upper and lower wing faces of the middle main beam and are respectively matched with the main beam upper and lower wing faces of the middle main beam; screw holes are respectively formed in the two ends of the upper wing surface and the lower wing surface of the main beam, a plurality of groups of screw holes are correspondingly formed in the upper wing surface and the lower wing surface of the C-shaped beam at preset intervals, and the screw holes in the upper wing surface and the lower wing surface of the main beam are in threaded connection with the screw holes in the upper wing surface and the lower wing surface of the C-shaped beam through bolts.

The Patent Application No. CN213138699 titled *"Lower part protector and vehicle behind vehicle"* discloses a utility model providing a lower part protector and vehicle behind vehicle, back lower part protector includes: a protective beam; at least one protective bracket is arranged on the protective cross beam, an adjusting part is arranged on the protective bracket, a matching part corresponding to the adjusting part is arranged on the frame, and the rear lower protective device is structured to adjust the distance between the protective cross beam and the ground in the rear lower protective device by adjusting the installation position of the adjusting part and the matching part. The utility model discloses a lower part protector behind vehicle can satisfy different specification tires and to the terrain clearance requirement of the lower limb of protection crossbeam, effectively prevents to dig into the vehicle bottom after vehicle (mainly indicate the kart) knocks into the tail, reduces injury and the vehicle loss of accident to personnel. Meanwhile, the rear lower part protection devices of the vehicles with tires of different specifications can be protected universally, the production cost is reduced, the rear lower part protection devices of the vehicles with various specifications are not required to be produced, and the production process is prevented from being easily confused.

The Patent Application No. WO2016163247A1 titled *"Underrun protector mounting member*" discloses an underrun protector mounting member provided with a contact surface portion which contacts the frame of the vehicle, and multiple holes which pass through the contact surface portion and in which multiple fastening members are arranged. The multiple holes include a pair of first holes and a pair of second holes, which are disposed towards the side of the underrun protector with respect to the pair of first holes. The distances L₂₂ from the second holes to a centroid O located in a site surrounded by the multiple holes are shorter than the distances L₂₁ between the first holes and the centroid O.

The Patent Application No. JP2012131449A titled *"Underrun protector device"* discloses an underrun protector device provided with a bracket provided in both side parts of an undercarriage frame in the vehicle width direction; the beam provided in undercarriage frame end part in the vehicle width direction through the bracket; a fastening part for attaching the beam to the bracket; and a fuse bolt for breaking the fastening part having the beam attached to the bracket when the outside force exceeding a prescribed load is worked. The bracket has an attaching surface on which a long hole for sliding a fastening member and a fixing hole for fixing the fuse bolt. The beam has a hole for attaching the fastening member and the fuse bolt and when the vehicle collides with the beam, the fuse bolt is broken, the beam slides the long hole through the fastening member downward to prevent the slipping of the counter vehicle in the collision.

As a result, there exists a need for an innovative and cost-effective rear underrun protector bracket assembly solution that is capable of accommodating variable vehicle console heights without the need for customized tooling and parts for each variant.

### Summary of the invention

The present invention addresses the limitations of the prior art by introducing a rear underrun protector bracket assembly designed to address the inefficiencies and limitations of conventional manufacturing methods in the automotive safety industry. The present invention introduces a unified approach to bracket assembly design capable of accommodating variable vehicle console heights without the need for customized tooling and parts for each variant.

The assembly employs standardized components and manufacturing processes to produce rear underrun protector bracket assemblies of various heights. By standardizing key elements and fabrication methods, the assembly achieves significant cost reductions, simplifies inventory management, and improves manufacturing efficiency.

Furthermore, the assembly incorporates specific features to optimize structural efficiency and weight reduction without compromising strength or safety compliance. Through strategic adjustments to flange dimensions, bolt configurations, and stiffener placements, the bracket assemblies achieve an optimal balance between structural integrity and weight savings to ensure that the bracket assemblies maintain robust performance under varying load conditions while meeting regulatory safety standards.

The disclosed assembly offers versatility by accommodating multiple height variants of rear underrun protector bracket assemblies, thereby eliminating the need for extensive customization, making the assembly suitable for a wide range of vehicle console heights. Further, the assembly contributes to improved safety in vehicular applications by maintaining structural integrity and meeting regulatory safety standards. By reducing the risk of underride accidents and enhancing overall vehicle safety, the assembly represents a significant advancement in rear underrun protector bracket assembly technology.

### Brief Description of drawings

**Figure 1a and 1b** illustrates a standardized shape accommodating both a first console with an offset a and a second console with an offset of a+x, in accordance with an embodiment of the present invention.
**Figure 2** illustrates a perspective view of the first console with offset a, in accordance with an embodiment of the present invention.
**Figure 3** illustrates a bolting mechanism utilized for the console with offset a, in accordance with an embodiment of the present invention.
**Figure 4** illustrates a flowchart of a method for reducing weight without compromising strength in a rear underrun protector bracket assembly, in accordance with an embodiment of the present invention.
**Figure 5** illustrates weight reduction strategies without compromising structural integrity by decreasing the flange width behind the axis of rotation, in accordance with an embodiment of the present invention.
**Figure 6** illustrates weight reduction strategies from the flange, in accordance with an embodiment of the present invention.
**Figure 7a and 7b** illustrates the number of plates utilized for console with offset a + x and console with offset a, in accordance with an embodiment of the present invention.
**Figure 8a** illustrates the incremental pitch increase and selective widening of the back plate strategically employed to optimize material usage without compromising load capacity, in accordance with an embodiment of the present invention.
**Figure 8b** illustrates the widening of the back plate executed from point A to point B, focusing on areas requiring extended width for beam attachment, in accordance with an embodiment of the present invention.
**Figure 9** illustrates the alignment of the bolt axis (n) parallel to the force direction (m), in accordance with an embodiment of the present invention.

### Detailed description of the invention

In order to more clearly and concisely describe and point out the subject matter of the claimed invention, the following definitions are provided for specific terms, which are used in the following written description.

The present invention discloses a universal rear underrun protector bracket assembly for variable console heights, featuring novel design attributes and attachment methodologies customized for distinct console variants. The assembly incorporates standardized shapes, shared tooling, and strategic component integration, manufacturing processes are optimized, leading to cost reduction and heightened operational efficiency. The assembly utilizes bolt attachment for both the console variants for mitigating weld failure risks, thereby optimizing structural integrity and reliability. The assembly's adaptability to various console configurations ensures optimal performance and safety.

Moreover, the assembly's adaptive design architecture enables seamless integration with various console configurations, ensuring optimal performance and safety across a diverse range of vehicular applications. The invention offers unparalleled versatility and reliability, thereby enhancing overall vehicle safety standards and regulatory compliance.

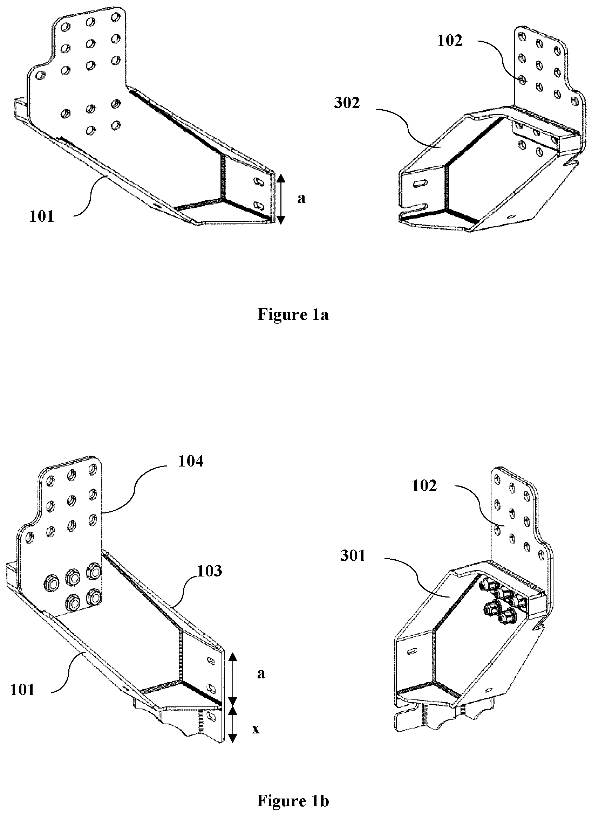

**Figure 1a and 1b** illustrates a standardized shape accommodating both a first console with an offset a and a second console with an offset of a+x, in accordance with an embodiment of the present invention. The assembly **(100)** incorporates novel features tailored to optimize the manufacturing process and bolster structural efficiency in rear underrun protector bracket assemblies. Notably, Figure 1a depicts part **(101)** and figure 1b depicts part **(102),** boasting a common shape suitable for both console with offset of a +x console with offset a. The unified design approach eliminates the need for separate configurations, streamlining production and reducing design complexity.

Furthermore, a unified tooling approach is adopted using third part **(103)** with part (301) and part **(302),** integrated with the first part **(101)** and second part **(102)** respectively, facilitating consistent manufacturing processes across assembly **(100)** variants. The utilization of common tooling enhances manufacturing efficiency, reduces production costs, and promotes uniformity in the fabrication process. The standardized tooling configuration, optimizes production workflows and ensures seamless integration into the assembly line.

Moreover, a fourth part **(104)** is affixed to the console with offset of a + x to reinforce structural integrity, where increased offset distances necessitate enhanced reinforcement. Further, the fourth part **(104)** features a removable bolting mechanism for ease of maintenance. The targeted reinforcement strategy optimizes structural integrity while minimizing material usage and production costs. Conversely, the fourth part **(104)** is deemed unnecessary for the console with offset a variant, where the offset distance is less and structural demands are correspondingly lower. The tailored approach to reinforcement ensures optimal structural performance while optimizing resource utilization.

The attachment mechanism for the fourth part **(104)** employs bolting mechanism **(105),** enabling facile removal and reattachment for maintenance purposes. The attachment method enhances assembly flexibility and ease of maintenance by facilitating straightforward disassembly and reassembly of components. The use of multiple bolts ensures secure attachment while offering the flexibility to dismantle and service the assembly as required, thereby improving overall ease of maintenance and assembly flexibility.

In an embodiment of the present invention, referring to the console with offset of a+ x (second), the load offset is incremented by +x (the x value could be 50mm for example) units compared to the console with offset a (first variant), where the load remains at its standard value. This distinction in load values between the two console variants necessitates targeted reinforcement strategies to ensure structural integrity while accommodating the increased offset distance in console with offset of a+ x.

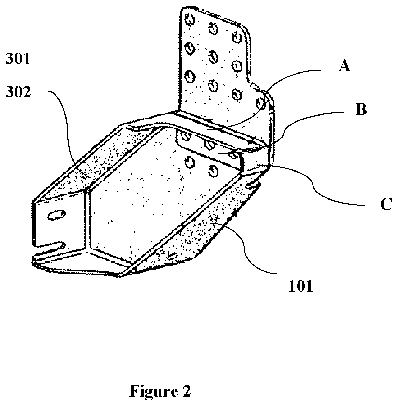

**Figure 2** illustrates a perspective view of the console, in accordance with an embodiment of the present invention. To streamline the assembly **(100)** and reduce the overall number of components, the present invention combines shape-A and Shape-B with the part **(301)** and part **(302),** respectively, as well as Shape-C with the first part **(101).** The consolidation minimizes the complexity of the assembly process and decreases the number of individual parts required, thus optimizing manufacturing efficiency. Furthermore, Shape-B is specifically designed to enhance the structural strength of both the Console with offset a and console with offset of a+ x. The unique geometry of the assembly **(100)** mitigates the risk of weld failure and provides additional reinforcement to withstand applied loads. The incorporation of a bend shape in Shape-B not only distributes loads more effectively but also serves as a supportive element within the assembly, further bolstering its overall strength and resilience. By integrating Shape-B into the bracket assembly design, the invention ensures robust performance across different console variants while simultaneously simplifying assembly **(100)** procedures and reducing the likelihood of component failure.

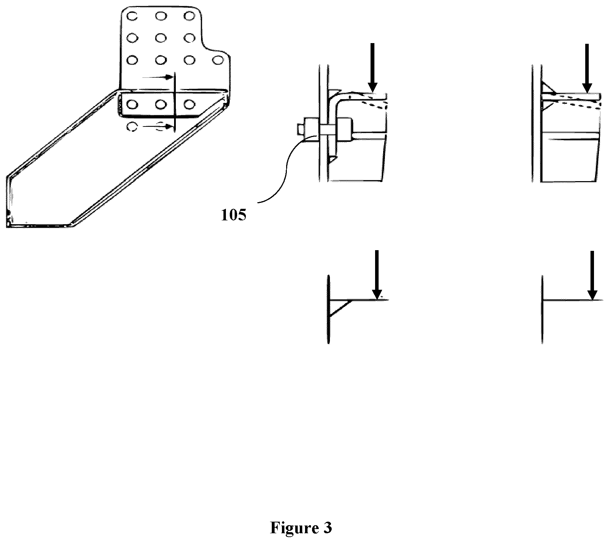

In one embodiment of the present invention, the bolting mechanism **(105)** is employed for the console with an offset of a + x, as depicted in **Figure 3. Figure 3** illustrates the reinforcement of the console's strength through the bending of the flange, rather than direct welding. The figure 3 serves as an illustrative example demonstrating the enhanced strength of the flange structure. Notably, the flange structure is shared between both console variants, differing only in the presence or absence of a bolting mechanism

The bolting mechanism **(105)** for console with a + x offset ensures robust structural integrity and reliability, enhancing the overall durability of the assembly **(100).** By employing bolts for attachment, the assembly **(100)** strength is improved thereby minimizing the likelihood of weld-related issues, such as cracking or breakage, thereby ensuring optimal performance and safety. Conversely, for the console with offset a variant, bolting is not employed, and weld attachment is utilized, in both console with offset a and console with offset of a+ x, the structure is same and welding is there. In case of console with offset of a+ x, an additional fourth plate **(104)** and bolting mechanism **(105)** is applied. There is no different approach between console with offset a and console with offset of a+x apart from the fourth plate **(104)** in addition. This differential approach is adopted due to the specific structural requirements and load conditions associated with each console variant.

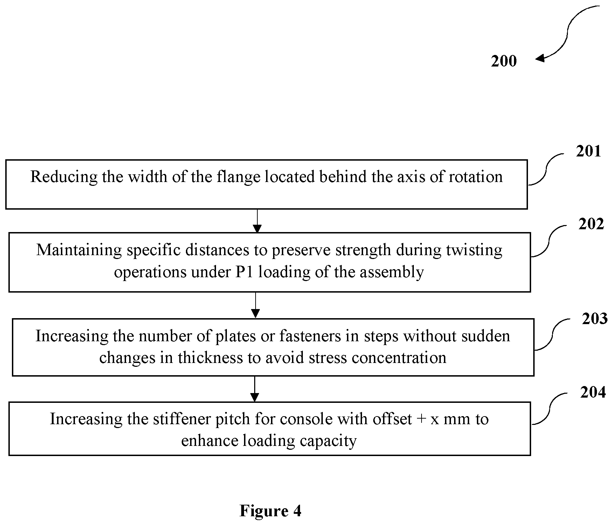

**Figure 4** illustrates a flowchart of a method for reducing weight without compromising strength in a rear underrun protector bracket assembly, in accordance with an embodiment of the present invention. The method **(200)** comprises the step of reducing the width of the flange located behind the axis of rotation in step **(201).** The reduction aims to decrease overall weight while still preserving the necessary structural integrity. In accordance with one embodiment of the present invention, the width optimization of the part is achieved by aligning the bolt axis parallel to the direction of force. The alignment strategy is determined based on the number of bolts and their strategic placement relative to the force direction. By aligning the bolt axis (n) parallel to the force direction (m), the width of the part can be effectively reduced without compromising structural integrity. In step **(202),** specific distances are maintained to ensure strength during twisting operations under loading of the assembly, thereby safeguarding against potential weaknesses that could compromise the bracket's effectiveness. Further, in step **(203),** the number of plates or fasteners gradually increases, without abrupt changes in thickness, to prevent stress concentration and maintain durability. Furthermore, in step **(204),** the loading capacity and the stiffener pitch is increased for console with offset a+ x, thereby reinforcing the assembly's ability to withstand external forces without sacrificing weight reduction objectives.

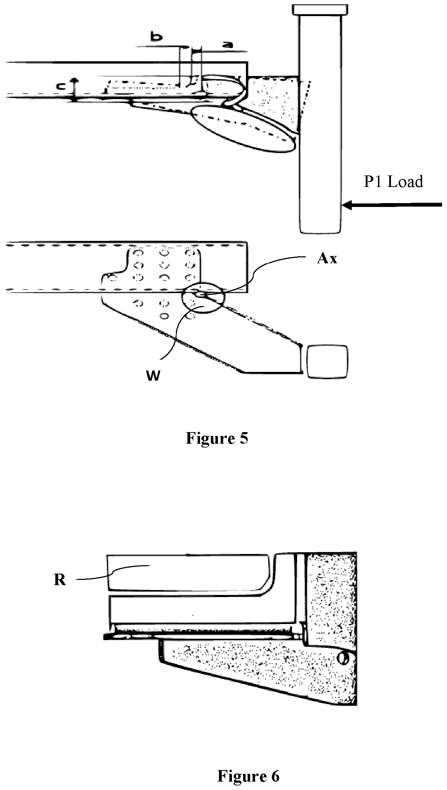

In an embodiment of the present invention, weight reduction without compromising structural integrity is achieved by decreasing the flange width behind the axis of rotation (Ax) as shown in **Figure 5****.** This strategic adjustment ensures that the overall weight of the bracket assembly is minimized while maintaining adequate strength and load-bearing capacity. Additionally, specific distances denoted as "a", "b", and "c" are carefully maintained to preserve strength during twisting operations, particularly under the influence of P1 load. By optimizing these distances, weak areas (W) prone to structural compromise are effectively reinforced as encircled in the figure 5, ensuring robust performance and preventing deformation or failure under applied loads. The assembly **(100)** achieves a balance between weight reduction from the flange as shown in **Figure 6** (wherein, the removed material is denoted by (R)), and structural integrity, enhancing overall efficiency and performance in rear underrun protector bracket assemblies.

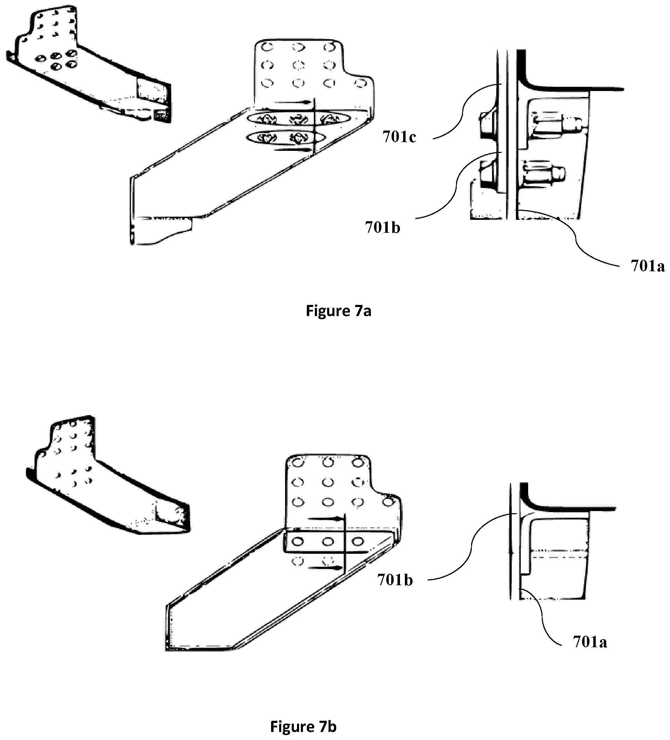

**Figure 7a and 7b** illustrates the number of plates utilized for both the first console with an offset a and the second console with an offset of a+x, in accordance with an embodiment of the present invention. In accordance with an embodiment of the invention, the number of plates or fasteners within the section area depicted as a gradual progression denoted by **(701a)** (1 plate), **(701b)** (2 plate), and **(701c)** (3 plate), respectively, and a gradual transition in thickness is maintained to alleviate stress concentration. This deliberate design methodology aims to enhance structural resilience by promoting uniform load distribution throughout the assembly **(100),** thereby mitigating the risk of premature failure. By incrementally increasing the number of plates or fasteners, the assembly **(100)** ensures that stress is evenly dispersed across the assembly, minimizing localized stress concentrations that compromises structural integrity. Furthermore, the avoidance of sudden changes in thickness serves to further dissipate stress, fostering a robust and durable bracket assembly **(100).**

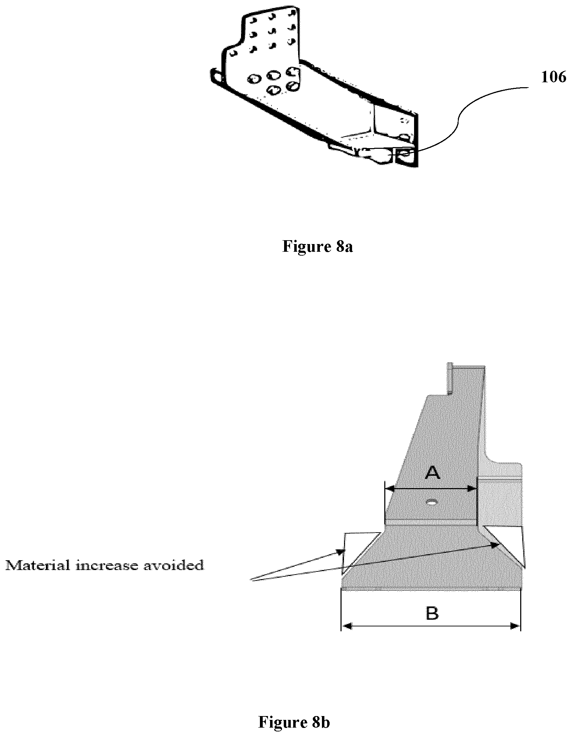

**Figure 8a** illustrates an embodiment of the invention where incremental pitch increase, and selective widening of the back plate **(106)** are strategically employed to optimize material usage without compromising load capacity, ensuring efficient utilization of materials while upholding structural integrity. By adjusting the pitch and width of the back plate **(106)** in specific areas, material conservation is achieved while preserving or enhancing the assembly's structural integrity and load-bearing capabilities. Additionally, the augmentation of stiffener pitch contributes to the improvement of the assembly's **(100)** loading capacity. Through the optimization of stiffener spacing, structural reinforcement is maximized, thereby bolstering the assembly's **(100)** ability to withstand applied loads. Furthermore, the widening of the back plate **(106)** is selectively executed from point A to point B, focusing on areas necessitating extended width for beam attachment as shown in the **Figure 8b****.** The targeted widening minimizes material waste by allocating increased width only where essential for beam attachment purposes, thereby enhancing overall efficiency and material utilization.

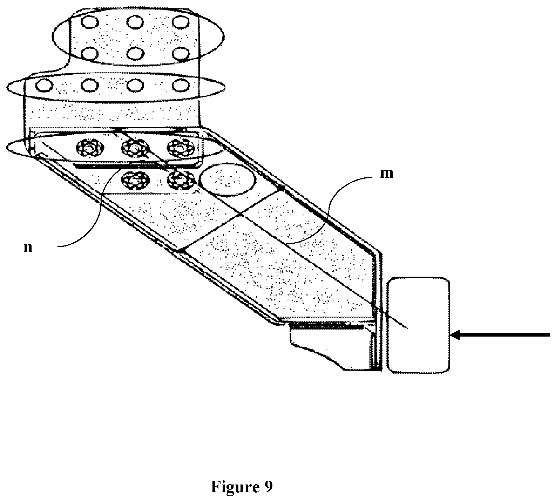

**Figure 9** illustrates the alignment of the bolt axis parallel to the force direction, in accordance with an embodiment of the present invention. In accordance with one embodiment of the present invention, the width optimization of the part is achieved by aligning the bolt axis represented by 'n' parallel to the direction of force 'm'. The alignment strategy is determined based on the number of bolts and their strategic placement relative to the force direction. By aligning the bolt axis parallel to the force direction, the width of the part can be effectively reduced without compromising structural integrity. Furthermore, the load-bearing area, corresponds to regions where a higher concentration of bolts is positioned. Conversely, the bolt axis aligns with the force direction, where the number of bolts can be minimized. This targeted allocation of bolts optimizes load distribution, reinforces structural integrity, and minimizes material usage and assembly **(100)** complexity.

The assembly **(100)** provides several distinct advantages, rooted in its innovative design features and strategic application of attachment methods. The employment of bolt mechanism **(105)** for the console with offset of a+ x variant enhances structural integrity and mitigates the risk of weld failure, ensuring robust performance and longevity of the bracket assembly **(100** This design refinement reduces the likelihood of weld-related complications, such as cracking or breakage, thereby enhancing reliability and reducing maintenance requirements over the assembly's **(100)** lifespan. Additionally, the present invention's versatility in accommodating different console variants with tailored attachment methods ensures optimal performance and safety across diverse vehicular configurations and load conditions. Furthermore, the streamlined manufacturing processes, facilitated by standardized shapes, common tooling, and strategic component integration, contribute to enhanced operational efficiency, reduced production costs, and overall cost-effectiveness and profitability. The tailored design for specific console variants, coupled with its enhanced structural integrity and reliability, also contributes to improved safety in vehicular applications, reducing the risk of underride accidents and enhancing overall vehicle safety standards.

### Reference numbers:

| **Components** | **Reference Numbers** |
|---|---|
| System | **100** |
| First part | **101** |
| Second part | **102** |
| Third part | **103** |
| Third first part | **301** |
| Third second part | **302** |
| Fourth part | **104** |
| Bolting mechanism | **105** |
| Adjustable width back plate | **106** |
| 1 plate, 2 plate, and 3 plate for console | **701a, 701b, 701c** |

## Claims

1. A universal rear underrun protector bracket assembly for variable console heights, the assembly **(100)** comprising:
a. a first part **(101)** featuring a standardized shape suitable for both a first console with an offset a and a second console with an offset of a+x;
b. a second part **(102)** featuring a standardized shape suitable for both the first console with an offset a and the second console with an offset of a+x;
c. a third part **(103)** fabricated using shared tooling for both part **(301)** integrated with the first part **(101)** and part **(302)** integrated with the second part **(102)** to streamline production and minimize part count;
d. a fourth part **(104)** affixed to the second console with an offset of a+x to reinforce structural integrity, featuring a removable bolting mechanism **(105)** for ease of maintenance; and

2. The assembly **(100)** as claimed in claim 1, wherein the part **(101)** and part **(102)** are seamlessly integrated with the part **(301)** and part **(302)** to optimize manufacturing efficiency and assembly time.

3. The assembly **(100)** as claimed in claim 1, wherein the part **(102)** is engineered to augment load-bearing capacity for both the first console with an offset a and the second console with an offset of a+x, ensuring robust structural support.

4. The system **(100)** as claimed in claim 1, wherein the part **(103)** incorporates a bent shape design to fortify load-bearing areas and mitigate weld failure risks.

5. The assembly **(100)** as claimed in claim 1, further comprises an adjustable width back plate **(106)** to accommodate varying attachment requirements, ensuring compatibility with different consoles and optimizing load distribution.

6. The assembly **(100)** as claimed in claim 1, wherein the width of the bracket assembly **(100)** is determined based on the number and placement of bolts with respect to the direction of force.

7. A method for reducing weight without compromising strength in a rear underrun protector bracket assembly, the method **(200)** comprising the steps of:
a. reducing the flange width behind the axis of rotation;
b. maintaining specific distances to preserve strength during twisting operations under load;
c. increasing the number of plates or fasteners in steps without sudden changes in thickness to avoid stress concentration; and
d. increasing the stiffener pitch to enhance loading capacity.

8. The method **(200)** as claimed in claim 7, wherein the width of the bracket assembly is determined based on the placement of bolts relative to the direction of force, allowing for reduction in width where force and bolt axes are parallel.
